# EUROPEAN PATENT APPLICATION

(11) **EP 0 584 355 A1**
(43) Date of publication of application: **02.03.1994**
(21) Application number: 92901438.9
(22) Date of filing: 18.12.1991
(51) Int. Cl.: B65D 85/57, G11B 33/04

(54) **FILE FOR HOUSING INFORMATION RECORDING MEDIA**

(71) Applicant: SLIDEX CORPORATION, Tokyo 171 (JP)
(72) Inventor: OZEKI, Jiro, Toshima-ku Tokyo 171 (JP)
(74) Representative: Jackson, Peter Arthur
(86) International application number: JP9101733
(87) International publication number: WO9312015

(57) **Abstract**

A file for housing information recording media is provided with a pair of cover sheet portions connected to each other in such a manner that the cover sheet portions are operable between an opened position and a closed position along folding lines disposed longitudinally. At least a pair of frames for housing information recording media are formed at positions substantially symmetrical to each other with respect to the longitudinal axial lines in each of the pair of cover sheet portions at the opened positions. Each of the frames is as high as the thickness of an information recording medium case or one half thereof. Each of the cover sheet portions is formed with a transparent window over the most portion of a region surrounded by the above mentioned frame, and, in a state where the cover sheet portions are closed, descriptions on the surface of the information recording medium case housed in the frame can be seen through.

## Description

### (Field of Industrial Application)

The present invention relates to a file for storing information recording medium such as a compact disc or an audio recording tape contained in a small case.

### (Prior Art)

Hithertofore, an information recording medium such as a compact disc (hereinafter referred to as CD) has generally been put into market with the medium contained in a case formed by a hard plastics material. Such case containing the medium has been stored by putting it in a storing box or a storing shelf. It should however be noted that with this manner of storing the medium the indication on the surface of the case storing the medium is not accessible so that each of cases must be taken out to see the indication thereon in order to locate a medium having a desired information recorded therein.

### (Disclosure of the Invention)

The present invention has been made in view of the above and has an object to provide a file for storing information recording medium such as a CD or a recording tape, the file making it possible to overall access to the indications of the surface of the medium with the medium stored in the file.

In order to accomplish this object, the information recording medium storing file in accordance with the present invention comprises a pair of cover portions which are connected together along a longitudinal folding line so that they can be foldably moved between an open position and a closed position. The cover portions are respectively formed at positions symmetrical with each other when the cover portions are in the open position with at least a pair of frames for storing the information recording mediums. Each of the frames is formed of side walls which are of a height substantially equal to or one-half of the thickness of the case for the information recording medium. Further, each of the cover portions is formed in substantial portion of the area encircled by the frame with a see-through window so that the indications on the surface of the information recording medium case stored in the frame can be seen when the cover portions are closed.

When the side walls defining each frame is of a height substantially equal to the thickness of the medium case to be stored in the frame, the medium case is stored in the frame of each of the cover portions. Usually, the recording medium case has tiles of the recorded information on one side and details of the recorded contents on the other side. It is desirable in storing the medium case in each of the cover portions that the case is placed in the frame so that the titles can be seen through the see-through window. With this arrangement, it is possible to read the titles of the recorded contents of the recording medium in the case from the out side with the file being in the closed position. The details of the recorded contents can be accessed by opening the file.

In the case where the height of the walls defining the frame corresponds to one-half of the medium case to be stored in the file, a containing section is formed by the frames of both of the cover portions and the medium case is stored in the storing section. In this case, the tiles can be read through the window of one of the cover portions and the details of the recorded contents through the window of the other cover portion.

According to one aspect of the present invention, the cover portions of the file are connected to a file back along opposed edge portions of the file back by means of hinges. In this arrangement, it is preferable to provide the file back with a see-through window, the wall portions of the frames which are located adjacent to the window in the file back being formed with cutouts corresponding to the window so that the titles or the like which may be placed on the back of the recording medium case can be read through this window.

In accordance with a preferred embodiment of the present invention, among the side walls defining the frame, at least one of the side walls extending in the lateral direction is provided with a resilient member for providing a resilient force directed toward the other side wall. In a further preferable embodiment of the present invention, there is provided an opening for defining the window which has a transparent member fitted to the window opening. According to a further preferable embodiment of the present invention, among the side walls defining the frame, the side walls provided at the opposite sides of the file and extending in the vertical direction are formed at the inner sides with resilient members for applying resilient force directed toward the inner side of the file.

According to a preferable embodiment of the present invention, the side wall having the resilient member thereon is formed at the uppermost portion with a first pressing plate extending inwardly of the frame. The side wall opposing to this side wall is formed at a height which is the same as the height of the first pressing plate with a second pressing plate opposing to and shorter than the first pressing plate in a manner to project inwardly.

### BRIEF DESCRIPTION OF THE DRAWINGS

Figure 1 is a perspective view showing in the open position an information recording medium storing file of the present invention;
Figure 2 is a perspective view showing in the closed position;
Figure 3 is a plan view showing a file of a second embodiment in the open position;
Figure 3A is a perspective view in an enlarged scale of the portion encircled by the phantom line in Figure 3;
Figure 4 is a plan view showing a file of a third embodiment in the open position;
Figure 5 is a perspective view showing a medium case to be inserted into or taken out of the file;
Figure 6 is a plan view showing a file of a fourth embodiment in the open position; and,
Figure 6A is a perspective view of the portion encircled by the phantom line in Figure 6.

### (Embodiments)

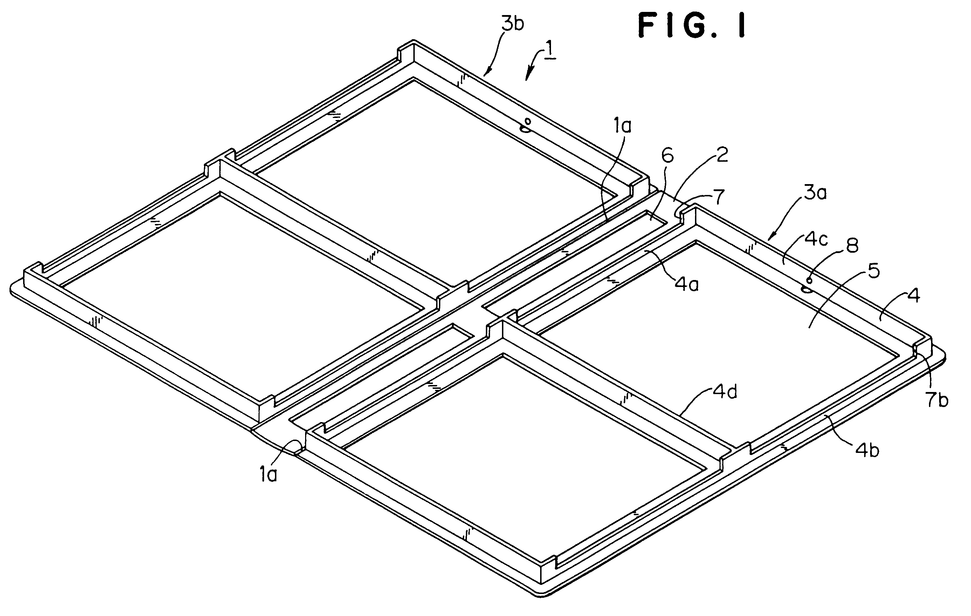

In Figure 1, there is shown an information recording medium storing file in accordance with one embodiment of the present invention. The file 1 in accordance with the present invention comprises a file back 2 and a pair of cover portions 3a and 3b which are connected at the opposite edges of the file back 2 through hinge connections 1a. The file 1 is made of a plastics material and can be opened and closed by folding the cover portions 3a and 3b about the hinge connections 1a.

The cover portions 3a and 3b are formed at positions symmetrical about a longitudinal axis of the file back 2 with four frames 4 each of a rectangular configuration. The frames 4 are defined by side walls 4a and 4b extending in a vertical direction of the file 1 and side walls 4c and 4d extending in a lateral direction. The height of the frame 4 is determined in accordance with the thickness of a medium case to be stored in the frame 4.

Each of the cover portions 3a and 3b is formed at a position corresponding to the bottom of the frame 4 with a rectangular window opening 5 which extends in an area corresponding substantially to the bottom. The file back 2 is formed at positions located between the frames 4 formed in the cover portions 3a and 3b with window openings 6 which have lengths substantially equal to the vertical length of the window openings 5.

The side wall 4a which is adjacent to the file back 2 and extends in the vertical direction is formed with rectangular cutouts 7 which are located so that they are overlapped substantially with the openings 6 when the file 1 is closed about the file back 2. The other side wall 4b is also formed with cutouts 7b of the same configuration. The side wall 4c which extends in the lateral direction is formed at a substantially central position with an inwardly projecting semi-spherical projection 8.

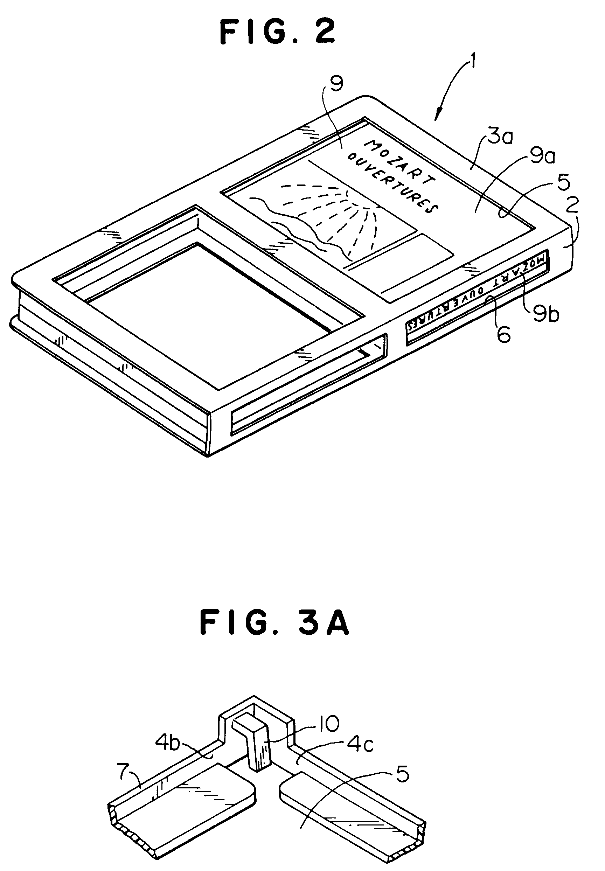

A medium case 9 shown in Figure 2 is inserted into the frame 4 from the upper side of the frame when the file 1 is in the open position. Then, the cover portions 3a and 3b are closed about the hinge connections 1a at the opposite sides of the file back 2 as shown in Figure 2. It is possible to see the front surface 9a of the medium case 9 through the window opening 5 and the case back 9b through the window opening 6. The medium case 9 is held in the frame 4 by means of the projection 8 and does not move in the frame 4.

Thus, it becomes possible by using the file 1 to read the indications on the front surface 9a and/or case back 9b of the medium case 9 with the case 9 stored in the file 1. When the file 1 is opened it becomes possible to read the indications on the back surface of the CD case and it is not required to take the case out.

Further, it is possible to fit a transparent member such as a transparent plastics member to the window opening 5 or 6. It is also possible to substitute the projection 8 by a spring.

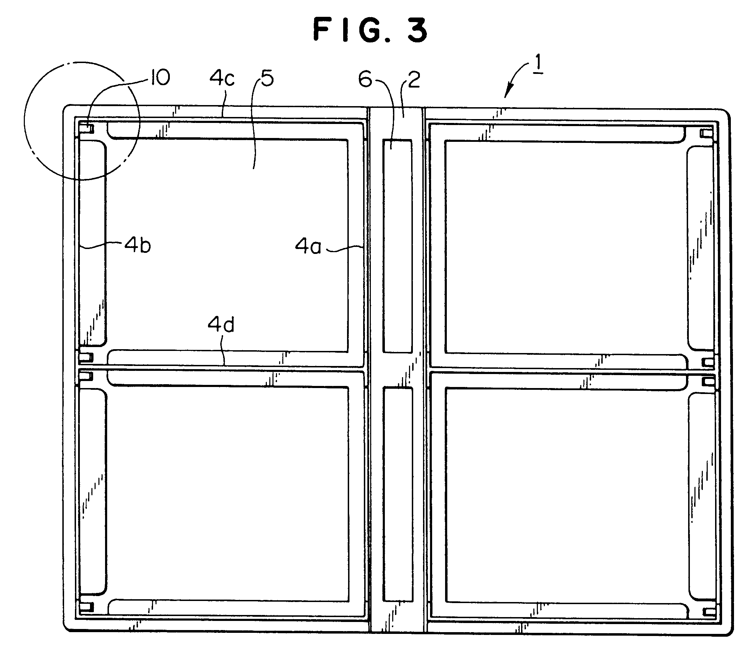

In Figure 3 and 3A, there is shown a second embodiment. In this embodiment, the structure of the file 1 of the first embodiment is provided in addition with spring members 10. The spring members 10 are provided on the opposite end portions of the side wall 4b which is the one among the vertically extending side walls remote from the file back 2. The spring members 10 apply to the medium case 9 stored in the frame 4 a reaction force toward the file back 2.

When the medium case is inserted into the frame 4, the side surface of the medium case abuts the spring members 10 and forces the spring members 10 toward the side wall 4b. The spring member 4b applies a reaction force to the side surface of the medium case to force the medium case toward the side wall 4a. The medium case is thus fixed in the frame 4 and does not move in the frame when the file 1 is transported.

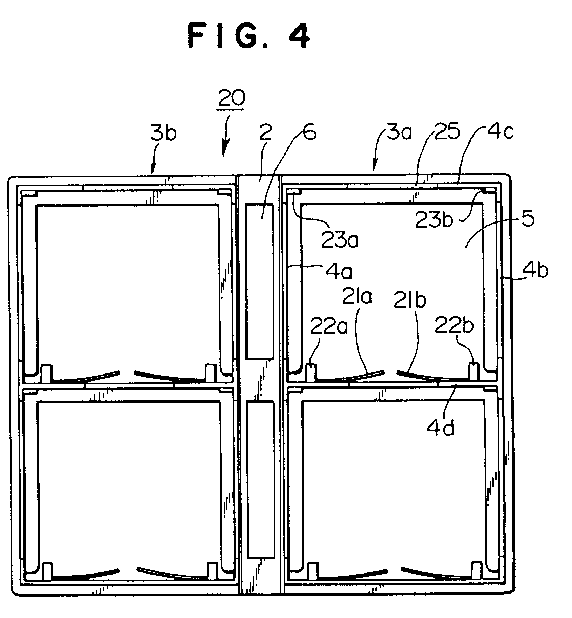

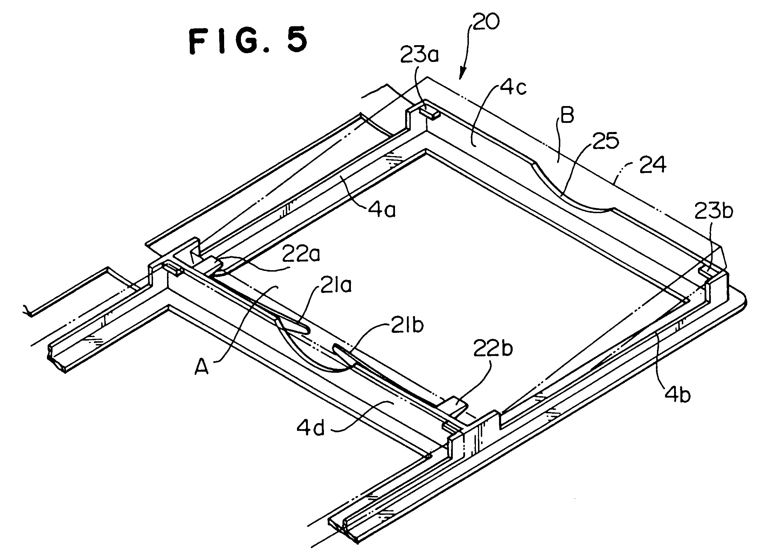

Referring to Figures 4 and 5, there is shown a third embodiment. In the file 20 of this embodiment, the side wall 4d is provided with a pair of spring members 21a and 21b which are adapted to apply a resilient force toward the side wall 4c. There are further provided on the opposite end portions of the side wall 4d a pair of pressing members 22a and 22b projecting from the upper end portion of the side wall 4d to the inside of the frame 4. The side wall 4c is further provided with a pair of pressing members 23a and 23b which are substantially opposing to the pair of pressing members 22a and 22b to project from the upper end of the side wall 4c toward the inside of the frame 4. The pressing members 22a and 22b and the pressing members 23a and 23b are located at the same level. The pressing members 22a and 22b are of the same length while the pressing members 23a and 23b are of the same length but the pressing members 22a and 22b are longer than the pressing members 23a and 23b.

When the medium case 24 is to be inserted into the frame 4, one end A of the case 24 is first inserted against the resilient force of the spring members 21a and 21b into the space beneath the pressing members 22a and 22b as shown in Figure 5. After the case 24 is sufficiently inserted, the other end B of the case 24 is fitted to the frame 4 while the medium case 24 is held against the side wall 4d against the resilient force of the spring members 21a and 21b. Thereafter, the medium case 24 is released and the medium case 24 is forced under the resilient force of the spring members 21a and 21b toward the side wall 4c to be held in the frame 4.

When the medium case 24 is to be taken out of the frame 4, a finger is placed into a semi-circular finger cutout 25 to force the case 24 toward the side wall 4d. As soon as the case 24 is shifted toward the side wall 4d and the end B is passed through the pressing members 23a and 23b, the case 24 is lifted at the end B and the case 24 is released to have the case 24 jumped out under the resilient force of the spring members 21A and 21b.

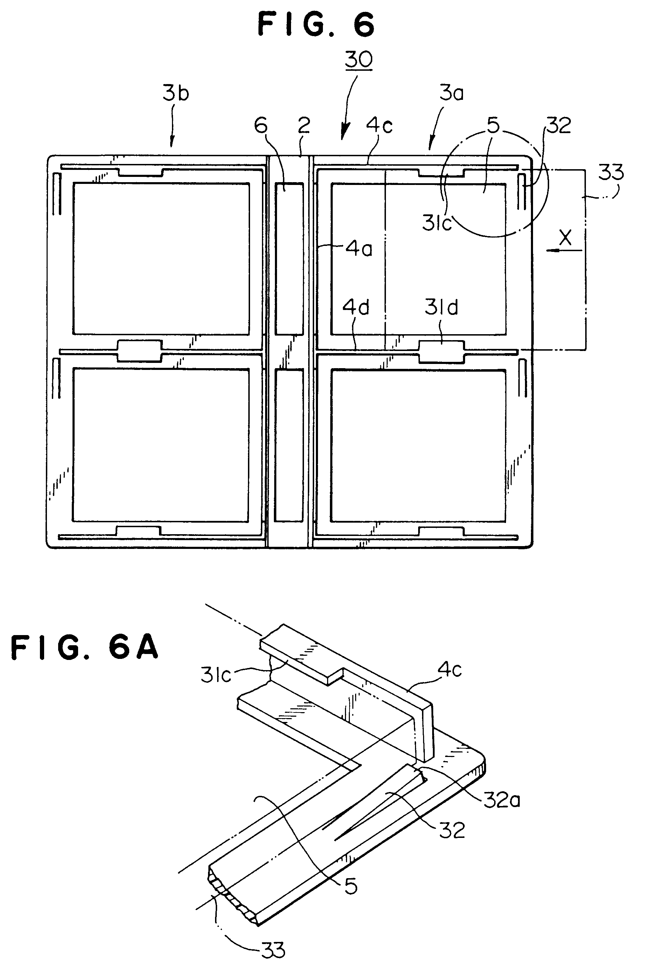

In Figures 6 and 6A, there is shown a fourth embodiment. The file 30 of this embodiment comprises as in the first embodiment a file back 2 and cover portions 3a and 3b. The cover portions 3a and 3b are formed with side walls 4a, 4c and 4d as in the first embodiment but the side walls 4b are omitted so that the side of the cover portions 3a and 3b corresponding to the outboard edge portions of the cover portions 3a and 3b are opened. The side walls 4a, 4c and 4d are of heights which are substantially equal to the thickness of the medium case to be stored therein. Openings 5 and 6 are also provided as in the first embodiment. The side walls 4c and 4d are formed substantially at their central portions with pressing members 31c and 31d which project from the upper ends of the side walls 4c and 4d toward the inside of the frame 4.

At the opposite portions of the file 1, there are formed at positions corresponding to the entrance of the frame 4 resilient portions 32 which are located adjacent to the side walls 4c. The resilient portions 32 are formed by providing cutouts at three portions of the bottom of the file 1 so that it is swingable about an end which is not cut. There is a free end 32a which, when there is no external force, slightly projects from the surface of the bottom of the file 1. The resilient portions 32 function, when their free ends are pressed into the bottom of the file 1, to provide a reaction force in the heightwise upper direction of the side wall 4c.

When it is desired to insert a medium case 33 into the frame 4, the free end 32a of the resilient portion 32 is inserted into the bottom surface of the file 1 and the medium case 33 is inserted under this condition from the side where the side wall is not provided to thereafter proceed the medium case 33 in the direction shown by an arrow X in Figure 6 until it is placed below the pressing members 31c and 31d. The pressing of the resilient portion 32 is terminated when the medium case 33 is fitted to the frame 4. With this operation, the free end 32a of the resilient member 32 restores the position shown in Figure 6A under its resiliency. Thus, the medium case 33 fitted to the frame 4 is prevented by the spring members 32 from dropping off the frame 4. When it is desired to take the case 33 out, the case 33 is pulled out with the resilient portion 32 pressed into the bottom surface of the file 1.

### (Industrial Applicability)

According to the information recording medium storing file, it is possible to read indications on the surface of a case containing an information recording medium such as CD or a recording tape while the case is stored in the file. It is not necessary to take out the case each time the indications on the case are to be affirmed.

## Claims

1. A file for storing an information recording medium, the file comprising a pair of cover portions connected together so that they can be opened and closed along a longitudinal folding line, the pair of cover portions being respectively formed at positions substantially symmetrical in the open position with respect to the longitudinal line with at least a pair of frames for storing the information recording medium, each of the frames being of a height corresponding to a thickness of the information recording medium case, each of the cover portions being formed at substantial portion of an area encircled by the frame with a see-through window, whereby indications on a surface of the information recording medium case can be seen while the file is closed.

2. A file for storing an information recording medium as set forth in claim 1, wherein said side walls are of a height substantially equal to the thickness of the information recording medium case.

3. A file for storing an information recording medium as set forth by claim 1 or 2, wherein said cover portions are connected to a file back through hinges along opposite sides of the file back, said file back being formed with a see-through window, a side wall which is adjacent to the file back among side walls defining said frame being formed with a cutout corresponding to the window formed in the file back, whereby indications on a back portion of the recording medium case can be read through the window in the file back.

4. A file for storing an information recording medium as set forth by either one of claims 1 to 3, wherein at least one of laterally extending side walls among side walls defining said frame is provided with resilient means for applying a resilient force toward the other side wall.

5. A file for storing an information recording medium as set forth by either one of claims 1 through 4, wherein a transparent member is fitted to the windows formed in each of the cover portions.

6. A file for storing an information recording medium as set forth by claim 1, wherein among side walls defining said frames, the side walls located outboard end portions of the file and extending in a vertical direction are formed at inner sides thereof with resilient means for applying a resilient force directed toward inwards the file.

7. A file for storing an information recording medium as set forth by claim 4, wherein the side wall provided with said resilient means is provided at an uppermost portion with a first pressing plate projecting inwardly of the frame, the side wall opposing to the side wall having the resilient means provided thereon being provided at a height substantially the same as the height wherein the first pressing plate is provided at a position opposing to the first pressing plate with a second pressing plate which is shorter than the first pressing plate and projecting inwardly of the frame.

8. A file for storing an information recording medium comprising;
a pair of cover portions connected together through a longitudinal connecting means, so that they can be moved between an open position and a closed position;
said cover portions are respectively formed at positions opposing to each other at least a pair of frames for storing at least one said information recording medium, each of the frames being defined by a side wall adjacent to said connecting means and extending in a longitudinal direction and lateral side walls extending at the opposite ends of the longitudinally extending side wall substantially perpendicularly to the longitudinally extending side wall, leaving a longitudinal portion at a side remote from said connecting means being left open;
see-through window means provided in said cover portion in a substantial portion of an area corresponding to a bottom of said frame;
the longitudinal portion which is left open being formed at an entrance of said frame with resilient holding means projecting from said cover portions.

9. A file for storing an information recording medium as set forth by claim 8 wherein said see-through window means has a transparent member fitted thereto.
